Europäisches Patentamt

European Patent Office

Office européen des brevets

(11) Numéro de publication : **0 410 826 B1**

(12) **FASCICULE DE BREVET EUROPEEN**

(45) Date de publication du fascicule du brevet :
04.05.94 Bulletin 94/18

(21) Numéro de dépôt : **90401822.3**

(22) Date de dépôt : **26.06.90**

(51) Int. Cl.$^5$ : **H04N 5/14**, G06F 15/70

(54) Procédé itératif d'estimation de mouvement, entre une image de référence et une image courante, et dispositif pour la mise en oeuvre de ce procédé.

(30) Priorité : **27.06.89 FR 8908546**

(43) Date de publication de la demande :
**30.01.91 Bulletin 91/05**

(45) Mention de la délivrance du brevet :
**04.05.94 Bulletin 94/18**

(84) Etats contractants désignés :
**DE ES GB IT**

(56) Documents cités :
IEEE TRANSACTIONS ON PATTERN ANALY-
SIS AND MACHINE INTELLIGENCE PAMI
VOL.8, NO. 5, SEPTEMBRE 1986, PAGES
565.593, NEW YORK, US; H.H. NAGEL ET AL.:
"AN INVESTIGATION OF SMOOTHNESS
CONSTRAINTS FOR THE ESTIMATION OF
DISPLACEMENT VECTOR FIELDS FROM
IMAGE SEQUENCES"
COMPUTER VISION, GRAPHICS AND IMAGE
PROCESSING VOL. 21, NO, 2, FEVRIER 1983,
PAGES 262-279, NEW YORK, US; M. YACHIDA:
"DETERMINING VELOCITY MAPS BY SPA-
TIO-TEMPORAL NEIGHBORHOODS FROM
IMAGE SEQUENCES"

(56) Documents cités :
IEEE TRANSACTIONS ON ACOUSTICS,
SPEECH, AND SIGNAL PROCESSING VOL,
ASSP-29, NO. 6, DECEMBRE 1981, PAGES
1147-1152; R.Y. TSAI ET AL.: "ESTIMATING
THREE-DEMENTIONAL MOTION PARAMETER
OF A RIGID PLANAR PATCH"
COMPUTER VISION GRAPHICS & IMAGE
PROCESSING VOL. 43, NO. 2, AOUT 1988,
PAGES 150-177, DULUTH,MN, US; W. ENKEL-
MANN: "INVESTIGATIONS OF MULTIGRID
ALGORITHMS FOR THE ESTIMATION OF
OPTICAL FLOW FIELDS IN IMAGE SEQUEN-
CES"
CONFERENCE ON COMPUTER VISION & PAT-
TERN RECOGNITION: PROCEEDINGS OF THE
IEEE 19-23 JUIN 1983, PAGES 233-242, HUD-
SON, MASSACHUSETTS, US; F. GLAZER:
"SCENE MATCHING BY HIERARCHICAL
CORRELATION"

(73) Titulaire : **THOMSON-CSF**
**173, Boulevard Haussmann**
**F-75008 Paris (FR)**

(72) Inventeur : **Blonde, Laurent**
**THOMSON-CSF, SCPI, Cédex 67**
**F-92045 Paris la Défense (FR)**
Inventeur : **Salmon, Philippe**
**THOMSON-CSF, SCPI, Cédex 67**
**F-92045 Paris la Défense (FR)**

(74) Mandataire : **Lincot, Georges et al**
**THOMSON-CSF, SCPI, B.P. 329, 50, rue**
**Jean-Pierre Timbaud**
**F-92402 Courbevoie Cédex (FR)**

EP 0 410 826 B1

## Description

L'invention concerne un procédé itératif d'estimation de mouvement, et un dispositif pour la mise en oeuvre de ce procédé. Dans le domaine des traitements d'images, le problème d'estimer un mouvement et de recaler une image par rapport à une autre image se pose fréquemment comme préalable à d'autres traitements tels que l'analyse des différences, le suivi d'objets en mouvement, etc ... Selon les applications, le type de recalage à effectuer peut être plus ou moins complexe. Le mouvement peut être : une simple translation ; une combinaison d'une translation et d'une rotation ; ou bien une combinaison d'une translation, d'une rotation, d'un grandissement, et d'un effet de perspective. Un procédé de recalage consiste essentiellement à estimer le mouvement d'une image par rapport à une autre, puis à calculer les valeurs numériques représentatives d'une image recalée, à partir des valeurs numériques représentatives de l'image à recaler et à partir de l'estimation de mouvement.

Dans le cas d'une simple translation, le mouvement peut être estimé par un procédé connu, de corrélation dans le domaine spatial ou dans le domaine fréquentiel. Dans le cas de la combinaison d'une rotation et d'une translation, un procédé connu consiste à résoudre un modèle affine basé sur la décomposition en série de Taylor des valeurs numériques de la luminance des images. Dans le cas de la combinaison d'une translation, d'une rotation, d'un grandissement, et d'un effet de perspective, des procédés connus consistent à résoudre un modèle basé sur les dérivés partielles de la luminance.

La résolution d'un modèle consiste à choisir un modèle, le représenter par un jeu d'équations, et déterminer les valeurs des paramètres de ces équations. Un tel procédé est décrit par exemple dans : "Estimating Three Dimensional Motion of a Rigid Planar Patch" R.Y TSAI, T.S. HUANG IEEE Trans. on ASSP, vol. 29 n° 6 Dec. 1981.

Ce procédé connu est un procédé différentiel qui n'est pas satisfaisant dans les cas où les images ont un faible contraste ou un faible rapport signal sur bruit, et dans les cas de mouvements de grande amplitude.

L'article intitulé "Scene Matching by Hierarchical Correlation" de Franck Glazer dans "Image Understanding Workshop, Washington, June 1983", décrit un procédé d'estimation de mouvement, qui consiste à : échantillonner l'image courante et l'image de référence avec une résolution croissant au cours d'une suite d'itérations ; puis mettre en correspondance des échantillons de l'image de référence et de l'image courante, en calculant une fonction exprimant la corrélation locale entre une fenêtre centrée sur un échantillon de l'image courante et des fenêtres à tester dans l'image de référence. La mise en correspondance permet de calculer des vecteurs de déplacement local. Ces derniers sont transmis d'un niveau de résolution au suivant, dans l'ordre des résolutions croissantes, en doublant les valeurs des composantes. Cette transmission permet d'initialiser la mise en correspondance des échantillons.

La mise en correspondance est réalisée avec une amplitude de recherche égale à un échantillon. Cette amplitude de recherche n'autorisant pas la correction d'une erreur d'initialisation, elle conduit à une instabilité et à des divergences dans les estimations locales du mouvement. Pour éliminer les échantillons conduisant à de fausses misés en correspondance, cet article suggère de sélectionner un petit nombre d'échantillons, particulièrement intéressants pour la mise en correspondance, au moyen d'un critère appelé opérateur d'intérêt, et qui peut être notamment un algorithme de détection des échantillons par où passe un contour en forme de coin. Cet opérateur d'intérêt peut être appliqué à chaque niveau de résolution ou bien seulement au niveau de résolution le plus élevé.

Le procédé connu n'est pas satisfaisant dans les cas où les images ont un faible contraste ou un faible rapport signal sur bruit.

Le but de l'invention est de proposer un procédé d'estimation de mouvement, en vue de permettre un recalage d'image, dans le cas où le mouvement est composé d'une translation, d'une rotation, d'un grandissement, et d'un effet de perspective, et ayant une grande amplitude, procédé qui soit meilleur que les procédés connus dans le cas des images faiblement contrastées et ayant un faible rapport signal sur bruit.

Le procédé objet de l'invention consiste essentiellement à résoudre un modèle de mouvement, en réalisant plusieurs itérations, pour une même image courante et une même image de référence, en considérant un échantillonnage de résolution croissante avec le rang des itérations réalisées, pour réduire l'amplitude apparente des mouvements au cours des premières itérations ; et en initialisant chaque itération avec l'estimation de mouvement réalisée au cours de l'itération précédente. L'estimation de mouvement réalisé à un niveau de résolution est transmise à un niveau de résolution meilleur, par l'intermédiaire du modèle. L'estimation de mouvement obtenue au cours de la dernière itération pour une image peut être transmise aussi à l'image suivante, en utilisant cette estimation pour initialiser la première itération de la résolution du modèle de mouvement de l'image suivante.

Selon l'invention, un procédé itératif d'estimation de mouvement, entre une image dite image de référence et une image dite courante, est caractérisé en ce qu'il consiste à réaliser un nombre fixé d'itérations, chaque

2

itération consistant à :

- échantillonner les deux images, avec une résolution croissant à chaque itération, et chaque échantillon d'image étant représenté par une valeur numérique ;
- détecter des échantillons caractéristiques dans l'image référence ;
- estimer un vecteur de mouvement local pour chaque échantillon caractéristique de l'image référence, en initialisant cette estimation avec un vecteur de mouvement déduit d'une estimation de mouvement global, réalisé au cours de l'itération précédant l'itération en cours ;
- faire une estimation du mouvement global de l'image courante, en calculant les valeurs de paramètres d'un modèle, à partir des vecteurs de mouvement local estimés au cours de l'itération considérée.

Ce procédé est efficace pour des images à faible contraste et à faible rapport signal sur bruit parce que l'estimation de mouvement est réalisée seulement sur des échantillons caractéristiques des images ; parce que les informations de mouvement sont globalisées par le modèle, en une estimation globale du mouvement de l'image courante, valable pour tous les échantillons de cette image courante ; et parce que les itérations de la résolution du modèle de mouvement, avec une résolution croissante, permet de propager des informations globales de mouvement, de la basse résolution à la haute résolution.

Il est efficace en présence de mouvements de grande amplitude, parce que ces mouvements ont une amplitude qui est numériquement faible pendant la première itération, ce qui permet d'utiliser un procédé d'estimation simple et efficace.

Selon un mode préférentiel de mise en oeuvre, l'estimation globale de mouvement consiste à résoudre un modèle de mouvement défini par les valeurs de huit paramètres.

L'invention a également pour objet un dispositif pour la mise en oeuvre de ce procédé.

L'invention sera mieux comprise et d'autres caractéristiques apparaîtront à l'aide de la description ci-dessous et des figures l'accompagnant :

- la figure 1, illustre l'échantillonnage d'une image avec une résolution croissant à chaque itération de l'estimation de mouvement ;
- la figure 2, représente l'organigramme d'un exemple de mise en oeuvre du procédé selon l'invention ;
- la figure 3, représente l'organigramme plus détaillé d'une partie de cet exemple de mise en oeuvre ;
- les figures 4 et 5, illustrent une étape de cet exemple de mise en oeuvre ;
- la figure 6 illustre une autre étape de cet exemple de mise en oeuvre ;
- la figure 7, représente le schéma synoptique d'un exemple de réalisation du dispositif pour la mise en oeuvre du procédé selon l'invention.

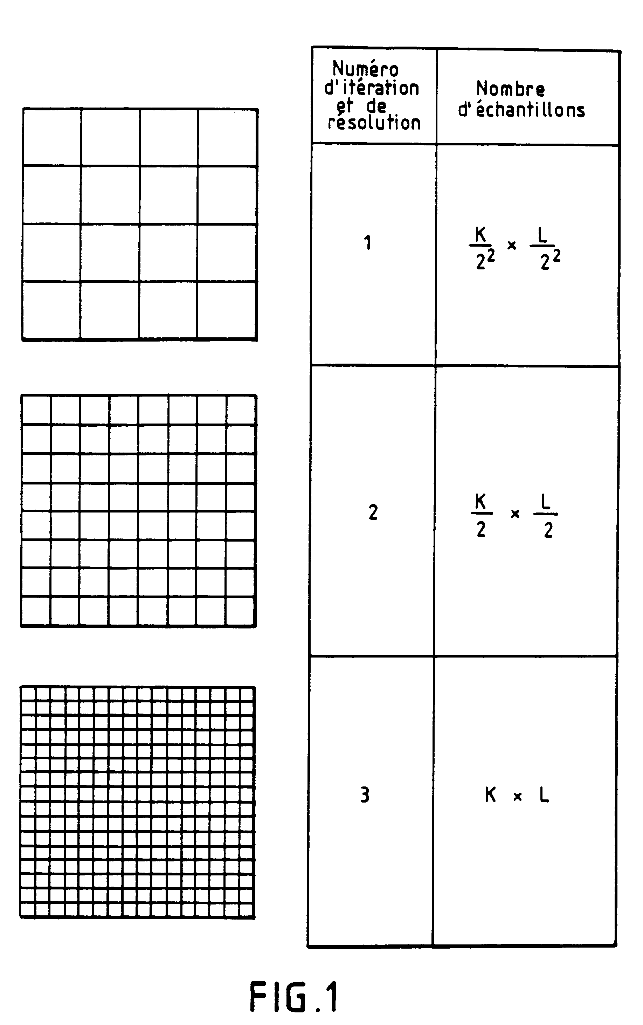

La figure 1 représente un exemple de mise en oeuvre consistant en trois itérations successives, numérotées de 1 à 3, sur des images ayant trois niveaux de résolution croissants, numérotés de 1 à 3. Pour l'itération numéro 3, l'image de référence et l'image courante sont échantillonnées avec un nombre d'échantillons K x L. Pour l'itération numéro 2, ces images sont échantillonnées avec un nombre d'échantillons K / 2 x L / 2. Pour l'itération numéro 1, ces images sont échantillonnées en un nombre d'échantillons égal à : K / $2^2$ x L / $2^2$. La valeur numérique des composantes des vecteurs de mouvement des échantillons, entre l'image de référence et l'image courante, est divisée par deux à chaque changement de résolution, puisque le nombre d'échantillons est divisé par deux dans chacune des deux dimensions.

Le nombre d'itérations, qui est égal au nombre de niveaux de résolution, est fixé de telle sorte que dans les images échantillonnées avec la plus faible résolution tout vecteur de mouvement a une amplitude inférieure ou égale aux dimensions d'un échantillon. Il est alors possible d'utiliser un procédé connu d'estimation de déplacement local à faible excursion. Ceci est avantageux puisqu'un tel procédé est relativement fiable et simple à mettre en oeuvre. Les itérations ultérieures, réalisées avec une résolution meilleure, sont initialisées à partir de l'estimation de mouvement globale obtenue au cours de l'itération précédente, c'est-à-dire avec une résolution inférieure. Ainsi, il est possible d'utiliser le même procédé connu d'estimation de mouvement local à faible excursion, pour chacune des itérations afin d'affiner l'estimation des vecteurs déplacements locaux, même s'ils ont une amplitude ayant une valeur élevée lorsque la résolution atteint son maximum.

En pratique, les images sont analysées et échantillonnées par un capteur d'images tel qu'une caméra de télévision. Pour obtenir plusieurs niveaux de résolution, un mode de mise en oeuvre consiste à sous-échantillonner les images déjà échantillonnées par le capteur, dans un rapport $2^{NI-k}$ pour la k-ième itération, k variant de 1 à NI, où NI est le nombre des itérations. Avant chaque sous-échantillonnage dans un rapport 2, les valeurs représentatives des échantillons sont filtrées par un filtre passe-bas pour éviter le phénomène bien connu de repliement du spectre. Ce filtrage a pour avantage de réduire l'effet de bruit sur l'estimation de mouvement.

Une seconde étape du procédé selon l'invention consiste à détecter des échantillons caractéristiques dans l'image de référence pour chacun des niveaux de résolution . Cette opération peut être réalisée en parallèle pour les NI niveaux de résolutions de l'image de référence.

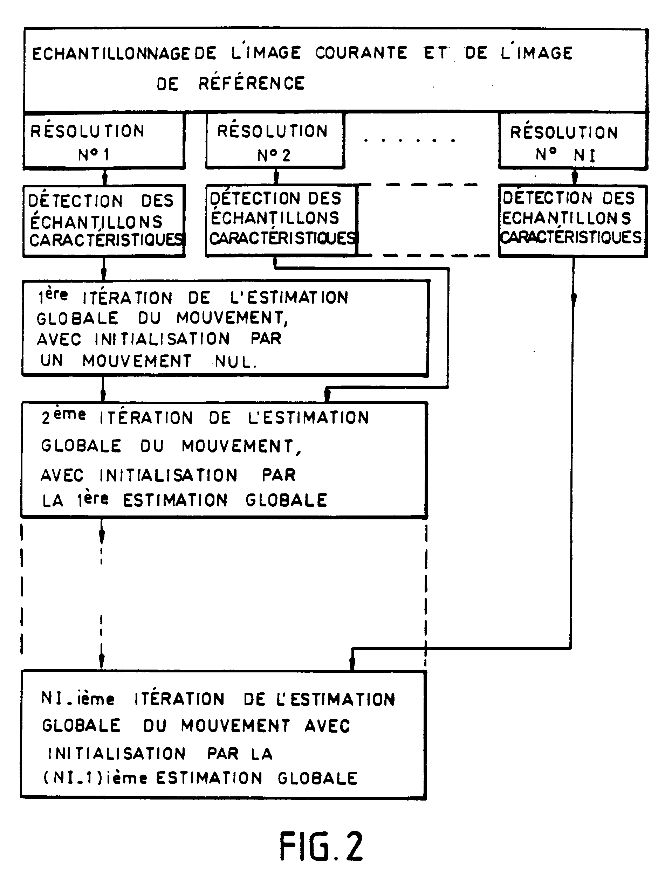

La figure 2 représente un organigramme d'un exemple de mise en oeuvre du procédé selon l'invention. Dans cet exemple, l'échantillonnage de l'image courante et de l'image de référence selon NI niveaux de résolution différents est réalisée en parallèle, de même que la détection des échantillons caractéristiques pour chaque niveau de résolution. La mise en oeuvre consiste ensuite à réaliser une première itération de l'estimation du mouvement global en prenant pour l'initialisation un mouvement nul. Puis il consiste à réaliser une deuxième itération de l'estimation du mouvement global en prenant pour l'initialisation la première estimation du mouvement global, réalisée au cours de la première itération. Puis il consiste à réaliser successivement d'autres itérations jusqu'à la dernière, la NI ième itération, qui est initialisée par la (NI-1)ième estimation du mouvement global. Cette dernière itération fournit une estimation qui peut être utilisée par exemple, pour un recalage de l'image courante par rapport à l'image de référence.

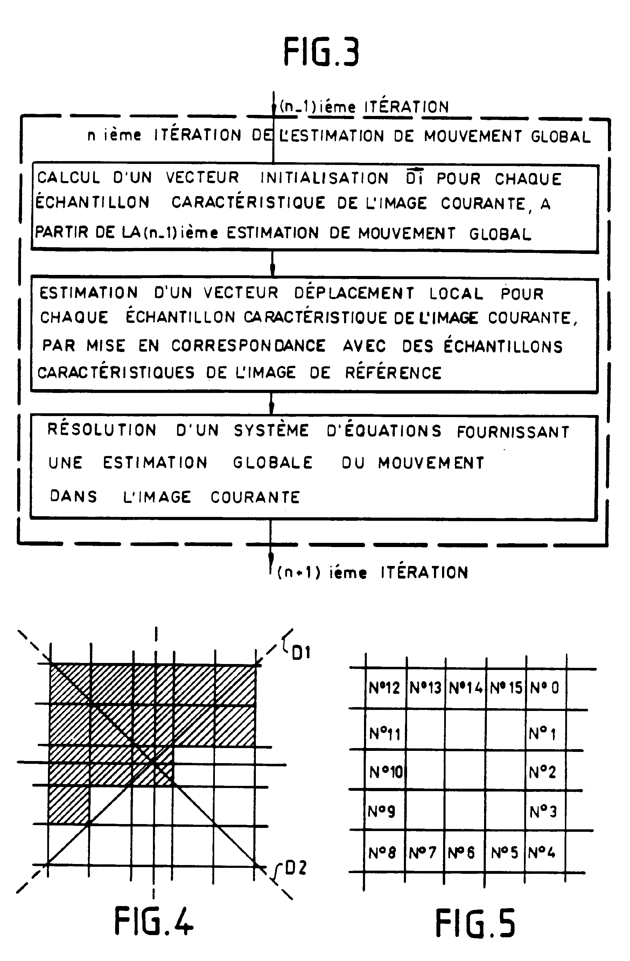

La figure 3, représente un organigramme des opérations réalisées au cours d'une n-ième itération, n étant supérieur à 1 et inférieur ou égal à NI. Cette itération consiste tout d'abord à calculer un vecteur appelé vecteur initialisation, Di, pour chaque échantillon caractéristique de l'image précédente, à partir de la (n-1)ième estimation de mouvement global, déterminée au cours de la (n-1)ième itération. Puis elle consiste à estimer un vecteur déplacement local pour chaque échantillon caractéristique de l'image précédente, par une mise en correspondance de cet échantillon avec des échantillons de l'image courante. Cette mise en correspondance sera explicitée plus loin. Puis elle consiste à résoudre un système d'équations constituant un modèle du mouvement global, pour obtenir 8 valeurs de paramètres constituant une estimation du mouvement global dans l'image courante. Puis cette estimation est utilisée pour initialiser la (n+1)ième itération.

La détection des échantillons caractéristiques dans une image consiste notamment à rechercher des échantillons par lesquels passe au moins un contour. Elle consiste en outre à découper cette image en un nombre fixé de zones, par exemple 9, ayant des surfaces égales, et à ne garder dans chaque zone qu'un nombre fixé de points caractéristiques. Ainsi, la répartition des points caractéristiques dans chaque image est relativement uniforme, afin d'éviter que des zones à forte densité de points caractéristiques aient un poids prépondérant dans l'estimation de mouvement.

Les échantillons qui sont considérés comme caractéristiques sont ceux qui présentent un contraste et qui peuvent être mis en correspondance avec des échantillons caractéristiques d'une autre image. Cette dernière condition n'est pas toujours remplie par un échantillon où passe un contour plat, le mouvement ne pouvant pas être détecté dans la direction du contour. Par contre, il est possible de détecter des mouvements de cet échantillon dans d'autres directions. Le procédé consiste donc à détecter les échantillons par lesquels passe au moins un contour, puis consiste à discriminer ceux par lesquels passe un contour anguleux et ceux par lesquels passe un contour qui est plat au voisinage de l'échantillon considéré. Les échantillons caractéristiques par lesquels passe une contour plat parallèle à l'un des axes de coordonnées jouent un rôle particulier pour la résolution du modèle. Ce rôle particulier sera explicité plus loin.

Pour déterminer si un échantillon comporte suffisamment de contraste pour constituer un échantillon caractéristique, le procédé comporte quatre étapes.

Chaque étape consiste à calculer la valeur d'une fonction traduisant le contraste respectivement dans quatre directions, chaque fonction étant calculée sur un segment de droite ayant une longueur correspondant à cinq échantillons et dont le centre coïncide avec le centre de l'échantillon courant. La luminance d'un échantillon de coordonnées (x, y) est notée I(x,y). L'échantillon courant a pour coordonnées (k,l). Le contraste selon les quatre directions est calculé respectivement selon les formules suivantes :

$$V_H = \sum_{i=-2}^{2} [I(k+i,l) - I(k,l)]^2 \qquad (1)$$

$$V_V = \sum_{i=-2}^{2} [I(k,l+i) - I(k,l)]^2 \qquad (2)$$

$$V_{D1} = \sum_{i=-2}^{2} [I(k+i,l+i) - I(k,l)]^2 \qquad (3)$$

$$V_{D2} = \sum_{i=-2}^{2} [I(k+i, 1-i) - I(k,1)]^2 \qquad (4)$$

Le procédé de détection des échantillons caractéristiques consiste ensuite à déterminer la valeur $V_{min}$ d'un premier opérateur d'intérêt permettant de détecter la direction où le contraste est le plus faible, parmi les quatre directions.

$$V_{min} = min(V_H, V_V, V_{D1}, V_{D2}) \qquad (5)$$

Lorsque le premier opérateur d'intérêt a une valeur élevée, cela garantit un contraste élevé dans chacune des quatre directions. Malgré un contraste élevé, un échantillon peut être peu intéressant pour l'estimation de mouvement si le contour est plat, et n'est pas parallèle à l'un des axes de coordonnées. Les échantillons caractéristiques les plus intéressants pour estimer le mouvement sont ceux par lesquels passent des contours ayant une forme anguleuse proche de la forme d'un coin. Pour détecter les échantillons où passe un contour plat, le procédé consiste à calculer la valeur d'un deuxième opérateur d'intérêt, noté GC (N).

La figure 4 représente un exemple dans lequel des échantillons présentent un contraste élevé dans les directions D1 et D2, mais où passe un contour plat peu intéressant. L'échantillon courant est au centre de la figure. Chaque échantillon est représenté par un carré. Dans cet exemple, le premier opérateur d'intérêt a pour valeur :

$$V_{min} = V_H = V_V = V_{D1} = V_{D2} \qquad (6)$$

La valeur $V_{min}$ peut être élevée s'il y a une grande différence de valeur de luminance entre les échantillons représentés en noir et les échantillons représentés en blanc. Cependant, l'échantillon courant n'est pas un échantillon caractéristique très intéressant puisqu'il ne permet pas de détecter les déplacements dans la direction du contour plat.

La valeur du deuxième opérateur d'intérêt est calculée par la formule suivante :

$$GC(N) = I(N) - I(N - 1) \qquad (7)$$

La valeur N est un numéro qui permet de désigner les échantillons situés à la périphérie d'un carré centré sur l'échantillon courant.

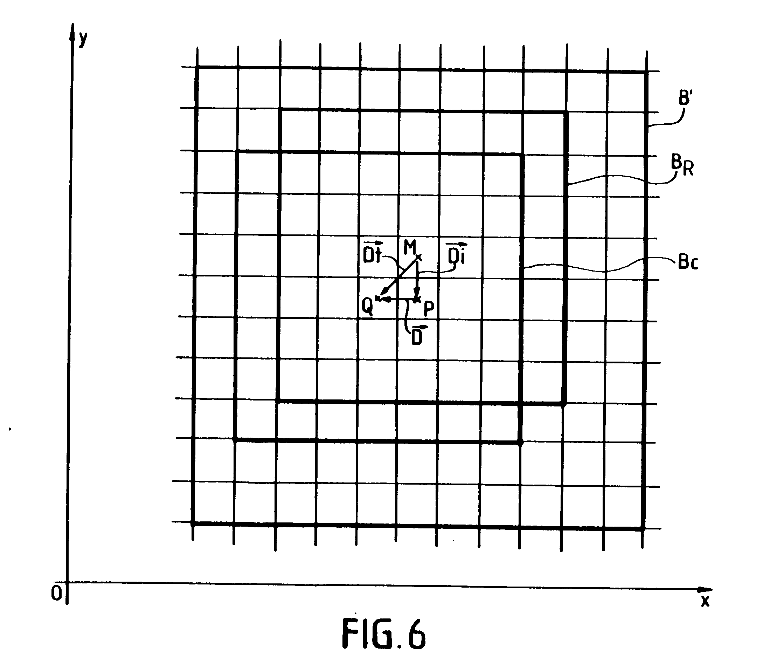

La figure 5 représente un exemple de mise en oeuvre dans lequel N varie de 0 à 15, car le carré comporte 5 x 5 échantillons.

Le procédé consiste ensuite à rechercher les valeurs de N qui correspondent respectivement à un minimum et à un maximum de ce deuxième opérateur d'intérêt. Ces valeurs sont notées $N_m$ et $N_M$. Ces valeurs définissent deux directions passant par le centre de l'échantillon courant et sur lesquelles sont situées deux branches de contour. Si le contour a une forme intéressante, c'est-à-dire une forme anguleuse, les valeurs $N_m$ et $N_M$ ont une différence, en valeur absolue, qui est inférieure à 6 modulo 16, dans cet exemple. Un échantillon courant est donc retenu comme échantillon caractéristique si les valeurs $N_m$ et $N_M$ correspondant à cet échantillon courant vérifient la relation :

$$min (|N_M - N_m|, 16 - |N_M - N_m|) < 6 \qquad (8)$$

Par contre, sont éliminés les échantillons qui ne vérifient pas cette relation et qui correspondent donc à un contour ayant deux branches formant un angle trop ouvert pour que l'échantillon puisse être retenu.

Les échantillons par lesquels passe un contour plat vertical ou horizontal, c'est-à-dire parallèle à l'un des axes de coordonnées, sont intéressants pour la résolution du modèle permettant l'estimation globale de mouvement. Ces échantillons sont rejetés par le premier opérateur d'intérêt. Ils sont détectés au moyen d'un troisième opérateur d'intérêt, spécifique pour les contours verticaux, et d'un quatrième opérateur d'intérêt, spécifique pour les contours horizontaux. Ces opérateurs d'intérêt sont calculés selon les formules suivantes, pour chaque échantillon courant :

$$O_V = |min (V_{D1}, V_{D2}, V_H) - V_V| \qquad (9)$$
$$O_H = |min (V_{D1}, V_{D2}, V_V) - V_H| \qquad (10)$$

Lorsque $O_V$, respectivement $O_H$, présente un maximum local, caractéristique particulier, par lequel passe un contour vertical, respectivement un contour horizontal.

Chaque image est divisée en neuf régions de surfaces égales dans lesquelles sont sélectionnés Nbec échantillons caractéristiques par lesquels passent des contours anguleux, et Nbec échantillons caractéristiques par lesquels passent des contours verticaux, et Nbec échantillons caractéristiques par lesquels passent des contours horizontaux. Ainsi, les points caractéristiques sont répartis de manière relativement uniforme dans chaque image. La sélection des Nbec échantillons caractéristiques pour chaque opérateur d'intérêt est réalisée en considérant les Nbec plus grandes valeurs de chaque opérateur d'intérêt pour une région donnée. Le procédé de détection des échantillons caractéristiques est appliqué de la même façon pour chaque niveau de résolution. Il permet de prendre en compte des informations apparaissant à des niveaux de résolution différents, pour contribuer à l'estimation du mouvement global. Nbec varie suivant le niveau de résolution (en pratique Nbec = 20, 12, 8 et 4 suivant le niveau de résolution).

L'estimation du mouvement local est réalisée par un procédé connu, de mise en correspondance de blocs d'échantillons. Elle porte sur des blocs de taille 7x7, dans des zones de recherche de taille 11x11. La figure 6 illustre cette estimation de mouvement local. L'estimation du mouvement local, pour un échantillon caractéristique donné, M, de l'image courante, consiste tout d'abord à définir un bloc Bc d'échantillons de l'image courante, centré sur l'échantillon M. Ce bloc a une taille de 7x7 échantillons. Puis il consiste à définir dans l'image courante une pluralité de blocs Bc ayant une taille 7x7 échantillons et centrés respectivement sur des échantillons Q qui correspondent à l'échantillon caractéristique donné, par une pluralité de vecteurs de déplacements Dt, appelés déplacements à tester. Chaque déplacement à tester est constitué de la somme vectorielle, d'un déplacement Di, appelé déplacement initial, calculé pour l'échantillon caractéristique donné, à partir de l'estimation globale de mouvement faite au cours de l'itération précédant l'itération en cours, s'il y en a eu une précédemment ; et à partir d'un déplacement supplémentaire D, qui est choisi parmi une pluralité de déplacements supplémentaires prédéterminés.

Il consiste ensuite à calculer, pour chacun des blocs correspondant aux déplacements à tester, la valeur d'une fonction de test F(D) traduisant la correspondance entre les valeurs de luminance des échantillons du bloc centré sur l'échantillon donné dans l'image courante, et les valeurs de luminance des échantillons du bloc correspondant au déplacement supplémentaire D. La fonction F (D) est calculée selon la formule :

$$F_{(\vec{D})} = \frac{1}{7 \times 7} \sum_{\vec{X} \in B_r} \left| I_R(\vec{X}) - I_C(\vec{X} - \vec{D}_i - \vec{D}) \right| \qquad (11)$$

où X représente un échantillon ayant des coordonnées (x, y) ; $B_r$ est le bloc de dimensions 7x7 dans lequel la recherche est effectuée ; $I_r$ (X) est la luminance de l'échantillon situé au point (x, y) dans l'image référence ; $I_C$ (X) est la luminance de l'échantillon situé au point (X, y) dans l'image courante.

La fonction de test F (D) pour l'échantillon Q est calculée sur un bloc $B_c$ de dimensions 7x7 qui est déplacé à l'intérieur d'un bloc B' de dimensions 11x11 centré sur l'extrémité P du vecteur $D_i$. Le déplacement supplémentaire D à une amplitude limitée à ±2 dans la direction verticale et dans la direction horizontale.

Parmi tous les vecteurs déplacements supplémentaires D qui sont essayés dans l'intervalle (-2,2)x(-2,2), le déplacement $D_m$ qui rend minimale la fonction de test F (D) est retenu. Le déplacement total $D_t$ , constitué de la somme vectorielle du déplacement initial $D_i$ et de ce déplacement supplémentaire $D_m$ , constitue alors l'estimation du mouvement local de l'échantillon caractéristique considéré, et sera utilisé ultérieurement pour la résolution du modèle, pour l'itération en cours.

Certains points caractéristiques sont éliminés après cette étape de l'estimation du déplacement local, dans le cas où chaque opérateur de détection des points caractéristiques, ne prend pas une valeur semblable d'une part dans l'image courante, pour l'échantillon caractéristique considéré et, d'autre part, dans l'image de référence, pour l'échantillon correspondant par l'estimation du mouvement local. Ces deux valeurs d'un opérateur d'intérêt sont notées Vminc pour l'image courante et Vminp pour l'image précédente. La comparaison de ces deux valeurs permet de conclure s'il y a la même configuration de contour au voisinage des deux échantillons considérés. Cette comparaison consiste par exemple à vérifier si :

$$\text{Max} \left( \frac{V_{minc}}{V_{minp}} , \frac{V_{minp}}{V_{minc}} \right) > 8 \qquad (12)$$

Dans le cas où cette relation n'est pas satisfaite, l'échantillon caractéristique et l'estimation de son mouvement local $D_t$, ne sont pas pris en compte pour déterminer les valeurs de paramètres du modèle représentant le mouvement global.

Après avoir estimé le mouvement local des points caractéristiques, et avoir éliminé les échantillons non valides, le procédé consiste à transmettre ces informations de mouvement local à l'ensemble de l'image, pour un niveau de résolution donné. Le mouvement global de l'image est modélisé par un modèle permettant de prendre en compte une translation combinée avec une rotation, un grandissement, et un effet de perspective, dans le cas où la scène peut être assimilée à un objet plan, ce qui est fréquemment le cas notamment lorsque les images ont été prises à une distance relativement grande par rapport à la scène, par exemple si ce sont des images aériennes. Le modèle utilisé est représenté par les équations suivantes :

$$X' = \frac{a_1 X + a_2 Y + a_3}{a_7 X + a_8 Y + 1} \quad (13)$$

$$Y' = \frac{a_4 X + a_5 Y + a_6}{a_7 X + a_8 Y = 1} \quad (14)$$

où (X,Y) sont les coordonnées d'un échantillon de l'image courante ; où (X',Y') sont les coordonnées de l'échantillon correspondant dans l'image de référence ; et où $a_1,..., a_8$ sont huit paramètres dont les valeurs définissent le mouvement global. Cette modélisation consiste à assimiler la scène à un plan, et à écrire les équations du mouvement à trois dimensions et à les projeter dans le plan de l'image. Les relations (13) et (14) sont vérifiées pour chaque échantillon caractéristique de l'image courante, et l'échantillon correspondant dans l'image de référence. Si le nombre des échantillons caractéristiques retenus dans chaque image est limité à un nombre prédéterminé N', la détermination des paramètres du modèle consiste à résoudre un système de 2N' équations :

$$\begin{cases} a_1 X_i + a_2 Y_i + a_3 - a_7 X_i X'_i - a_8 Y_i X'_i = X'_i \\ a_4 X_i + a_5 Y_i + a_6 - a_7 X_i Y'_i - a_8 Y_i Y'_i = Y'_i \end{cases} \quad i \in [1, N'] \quad (15)$$

qui peut s'écrire :

$$\begin{cases} [M_1] \, [A_1] = [X'] \\ [M_2] \, [A_2] = [Y'] \end{cases} \quad (16)$$

avec

$$M_1 = \begin{bmatrix} X_1 Y_1 & 1 & -X_1 X'_1 & -Y_1 X'_1 \\ \cdot & \cdot & \cdot & \cdot \\ X_N Y_N & 1 & -X_N Y'_N & -Y_N Y'_N \end{bmatrix} \quad A_1 = \begin{bmatrix} a_1 \\ a_2 \\ a_3 \\ a_7 \\ a_8 \end{bmatrix} \quad X' = \begin{bmatrix} X'_1 \\ \cdot \\ \cdot \\ X'_N \end{bmatrix} \quad (17)$$

$$M_2 = \begin{bmatrix} X_1 Y_1 & 1 & -X_1 X'_1 & -Y_1 X'_1 \\ \cdot & \cdot & \cdot & \cdot \\ X_N Y_N & 1 & -X_N Y'_N & -Y_N Y'_N \end{bmatrix} \quad A_2 = \begin{bmatrix} a_4 \\ a_5 \\ a_6 \\ a_7 \\ a_8 \end{bmatrix} \quad Y' = \begin{bmatrix} Y'_1 \\ \cdot \\ \cdot \\ Y'_N \end{bmatrix} \quad (18)$$

Chacun de ces deux systèmes à N équations est résolu aux moindres carrés par :

$$[A_1] = ([M_1]^t [M_1])^{-1} [M_1]^t [X'] \quad (19)$$
$$[A_2] = ([M_2]^t [M_2])^{-1} [M_2]^t [Y'] \quad (20)$$

où t représente la transposition et -1 l'inversion d'une matrice.
ou par une autre méthode telle que la méthode de Householder.

Les échantillons caractéristiques particuliers, par lesquels passe un contour vertical, sont utilisés en plus des points caractéristiques par lesquels passe un contour anguleux, pour calculer la matrice $A_1$ selon la formule (19). Les échantillons caractéristiques par lesquels passe un contour plat horizontal sont utilisés, en plus des échantillons caractéristiques par lesquels passe un contour anguleux, pour déterminer la matrice $A_2$ en appliquant la formule (20).

La résolution du système d'équations par l'algorithme des moindres carrés, effectue un lissage du mouvement sur l'ensemble des échantillons caractéristiques pour chaque niveau de résolution. Cette globalisation de l'information de mouvement, à chaque niveau de résolution, moyenne les mouvements locaux et réduit ainsi l'influence du bruit.

Lorsque les valeurs des paramètres $a_1,..,a_8$ ont été calculées, il est possible de déterminer le mouvement local d'un échantillon quelconque de l'image courante, au niveau de résolution pour lequel ces paramètres ont été déterminés. Le mouvement ainsi déterminé est une bonne base de départ pour déterminer le mouvement local, au niveau de résolution immédiatement supérieur. Par exemple, si les valeurs des paramètres ont été déterminées pour le niveau de résolution n°1, au cours de la première itération, il est possible de calculer les coordonnées (X'Y') d'un échantillon de l'image courante au niveau de résolution n°2, correspondant à un échantillon caractéristique de coordonnées (X,Y) dans l'image précédente au niveau de résolution n°2. Il suffit pour cela d'appliquer les formules (13) et (14).

Les coordonnées (X',Y') ainsi calculées constituent des valeurs initiales fiables pour l'estimation d'un mouvement local au cours de l'itération n°2, ces coordonnées constituant les composantes du vecteur déplacement initial Di. Ces valeurs initiales sont fiables car l'ensemble des mouvements locaux estimés au cours de l'itération n° 1 ont été moyennés et globalisés par l'utilisation du modèle, ce qui limite les effets d'éventuelles fausses mises en correspondance pour certains points caractéristiques, au cours de l'itération n° 1.

Lorsque les huit valeurs de paramètres ont été déterminées pour le niveau de résolution maximal, l'estimation de mouvement global est alors terminée. Il est possible de l'utiliser, par exemple, pour compenser le mouvement du fond d'une image courante par rapport au fond d'une image de référence. Les déplacements entre les deux images ayant en général des composantes non entières, il est nécessaire de calculer la valeur de luminance d'un échantillon déplacé, au moyen d'un procédé d'interpolation. Plusieurs procédés d'interpolation classiques peuvent être utilisés, notamment le procédé dit d'interpolation cubique.

Une variante du procédé selon l'invention peut consister, en outre, à décomposer chaque image en un nombre fixé de sous-images, et à traiter chaque sous-image indépendamment des autres sous-images, notamment en déterminant une estimation de mouvement global pour chaque sous-image, en calculant un jeu de valeurs de paramètres indépendamment pour chaque sous-image.

Les images traitées sont en général les images d'une suite d'images vidéo, et l'image de référence est généralement l'image précédant immédiatement l'image courante. L'image de référence peut également être la première image de la séquence.

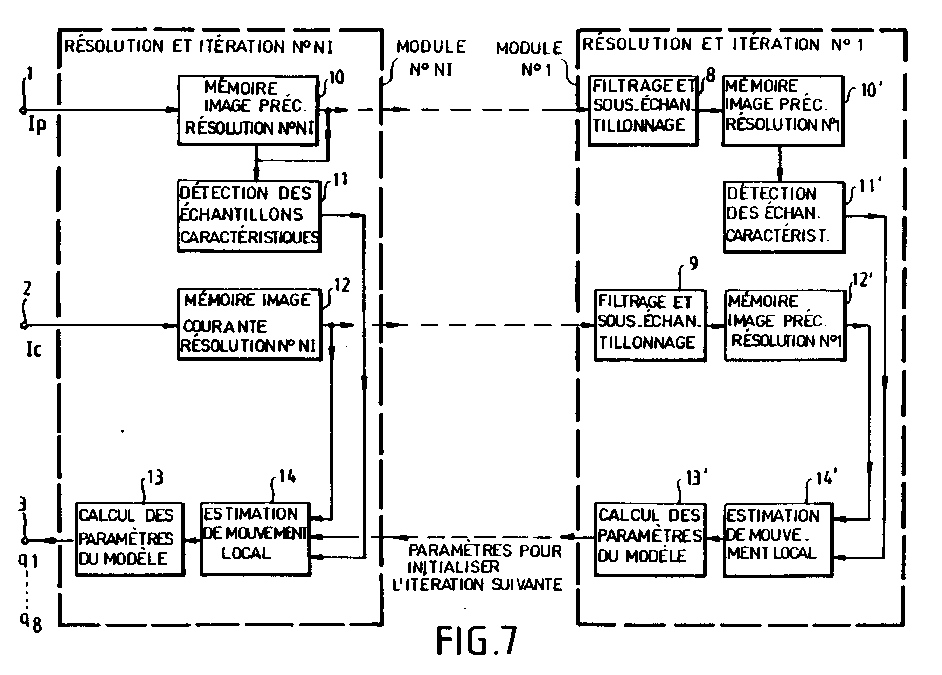

La figure 7 représente le schéma synoptique d'un exemple de réalisation d'un dispositif pour la mise en oeuvre du procédé selon l'invention. Cet exemple de réalisation comporte NI modules quasi identiques, pour réaliser un nombre NI d'itérations portant respectivement sur NI niveaux de résolution dans les images traitées. Seuls les modules n° NI et n° 1 sont représentés sur la figure. Deux bornes d'entrée 1 et 2 reçoivent respectivement les valeurs de luminance $I_p$ et $I_c$ de l'image de référence et de l'image courante. Une borne de sortie 3 fournit les valeurs de huit paramètres $a_1,.., a_8$ définissant le modèle représentant l'estimation de mouvement global de l'image courante par rapport à l'image précédente. Les bornes d'entrée 1 et 2 sont reliées respectivement à une première et une seconde entrée du module n°NI qui réalise l'itération n°NI sur les images ayant le niveau de résolution n°NI. La borne de sortie 3 est reliée à une première sortie de ce module n°NI.

Ce dernier possède une deuxième et une troisième sortie reliées respectivement à une première et à une deuxième entrée du module n°(NI-1). Le module n°NI possède en outre une troisième entrée qui est reliée à une sortie du module n°(NI-1), qui est l'homologue de la première sortie du module n°NI.

Le module n°2, qui n'est pas représenté, possède une deuxième et une troisième sortie reliées respectivement à la première et à la deuxième entrée du module n°1 ; et il possède une troisième entrée qui est reliée à la première sortie du module n°1. Le module n°1 est légèrement différent des modules précédents car il ne possède pas de première et de deuxième sorties, ou tout au moins elle n'est reliée à aucun autre module. En outre, le module n°1 ne possède pas de troisième entrée. (sauf si l'on désire une initialisation temporelle).

Le module n° NI comporte : une mémoire 10 pour stocker l'image précédente échantillonnée avec la résolution n°NI ; un dispositif 11 de détection des échantillons caractéristiques ; une mémoire 12 pour stocker l'image courante échantillonnée avec la résolution n°NI ; un dispositif 13 de calcul des paramètres du modèle ; et un dispositif 14 d'estimation de mouvement local.

La première et la seconde entrée du module n° NI sont reliées respectivement à des entrées de données de la mémoire 10 et de la mémoire 12. La deuxième et la troisième sorties du module n° NI sont constituées respectivement par des sorties de données de la mémoire 10 et de la mémoire 12. Ces sorties de données sont reliées aussi respectivement à une entrée du dispositif 11 et à une entrée du dispositif 14. Le dispositif 14 possède une première et une deuxième entrées reliées respectivement à des sorties des dispositifs 11 et 12, et possède une troisième entrée constituant la troisième entrée du module n°NI. Une sortie du dispositif 14 est reliée à une entrée du dispositif de calcul 13. La sortie de ce dernier constitue la première sortie du module n°NI.

La résolution n° NI correspond à la résolution de l'échantillonnage réalisé par le capteur d'images, par conséquent les valeurs de luminance des échantillons de l'image précédente sont stockées directement dans la mémoire 10 et les valeurs de luminance des échantillons de l'image courante sont stockées directement dans la mémoire 12. Le dispositif 11 de détection des échantillons caractéristiques détermine les coordonnées des échantillons caractéristiques de l'image courante. Le dispositif 14 estime le mouvement local de chaque échantillon caractéristique en appliquant la formule (11). Le dispositif 13 déduit de ces mouvements locaux huit valeurs de paramètres définissant le mouvement global de l'image courante.

Les modules n°(NI-1)..., n°1, comportent : une mémoire 10', un dispositif de détection 11', une mémoire 12', un dispositif de calcul 13', et un dispositif d'estimation 14', analogues par leur structure et par leur fonction aux dispositifs portant les mêmes références numériques dans le module n° NI. Par contre, chacun de ces modules comportent en outre deux dispositifs de filtrage et de sous-échantillonnage, 8 et 9, qui sont intercalés respectivement entre la première entrée du module et l'entrée de données de la mémoire 10', et entre la deuxième entrée du module et l'entrée de données de la mémoire 12'. Les dispositifs 8 et 9 réalisent un sous-échantillonnage dans un rapport 2, après avoir filtré les valeurs de luminance qu'ils reçoivent, de façon à éliminer les fréquences élevées pouvant causer le phénomène de repliement de spectre. Ces dispositifs de filtrage et de sous-échantillonnage sont des dispositifs numériques très classiques.

Les dispositifs de calcul 13 et 13' peuvent être constitués chacun d'un microprocesseur programmé pour résoudre les systèmes d'équations (19) et (20) selon l'algorithme classique dit des moindres carrés. Les dispositifs 14 et 14' d'estimation de mouvement local peuvent être constitués chacun d'un microprocesseur programmé pour calculer la fonction F (D) selon la formule (11) et sélectionner le vecteur déplacement testé qui rend cette fonction maximale. Les dispositifs 14 des modules n° 2 à n° NI sont programmés aussi pour calculer, pour chaque échantillon caractéristique, un déplacement initial. Ils appliquent alors les formules (13) et (14), en utilisant les valeurs de paramètres $a_1,.., a_8$ fournies à la troisième entrée du module considéré. Les dispositifs 11 et 11' de détection d'échantillons caractéristiques peuvent être constitués chacun d'un microprocesseur programmé pour calculer les valeurs des opérateurs d'intérêt, selon les formules (1) à (10) et pour sélectionner les échantillons en fonction des valeurs des opérateurs d'intérêt. La programmation de ces microprocesseurs est à la portée de l'homme de l'art.

L'invention ne se limite pas aux exemples de réalisation décrits ci-dessus, de nombreuses variantes sont à la portée de l'homme de l'art. Notamment, il est possible de réaliser le sous-échantillonnage des images non pas par des dispositifs mis en série, mais mis en parallèle. Dans le premier cas, les dispositifs de filtrage et de sous-échantillonnage, tels que les dispositifs 8 et 9, peuvent être tous identiques. Dans le second cas, ils sont différents de façon à procurer une bande passante adaptée à chaque niveau de résolution. La réalisation de ces dispositifs de filtrage et de sous-échantillonnage est à la portée de l'homme de l'art dans ces deux cas.

## Revendications

1. Procédé itératif d'estimation de mouvement, entre une image dite image de référence et une image dite courante, caractérisé en ce qu'il consiste à réaliser un nombre fixé d'itérations, chaque itération consistant à :
   - échantillonner les deux images, avec une résolution croissant à chaque itération, et chaque échantillon d'image étant représenté par une valeur numérique ;
   - détecter des échantillons caractéristiques dans l'image de référence ;
   - estimer un vecteur de mouvement local pour chaque échantillon caractéristique de l'image de référence, en initialisant cette estimation avec un vecteur de mouvement déduit d'une estimation de mouvement global, réalisée au cours de l'itération précédant l'itération en cours ;
   - faire une estimation du mouvement global de l'image de référence, en calculant les valeurs de paramètres d'un modèle, à partir des vecteurs de mouvement local estimés au cours de l'itération considérée.

2. Procédé selon la revendication 1, caractérisé en ce que pour faire l'estimation du mouvement global de l'image courante, il consiste à calculer les valeurs de huit paramètres a1,.., a8 définissant un modèle de mouvement tel qu'un échantillon ayant des coordonnées X, Y respectivement par rapport à un premier

9

et un second axe de coordonnées, est déplacé en des coordonnées X', Y', telles que :

$$X' = \frac{a_1 X + a_2 Y + a_3}{a_7 X + a_8 Y + 1} \quad (13)$$

$$Y' = \frac{a_4 X + a_5 Y + a_6}{a_7 X + a_8 Y = 1} \quad (14)$$

les huit valeurs de paramètres a1, ..., a8 étant calculées en résolvant un système d'équations à huit inconnues constitué par les deux relations ci-dessus, écrites pour des échantillons caractéristiques, les coordonnées X', Y' étant déterminées en fonction du vecteur mouvement local estimé respectivement pour chacun de ces échantillons, et en fonction des coordonnées X, Y de l'échantillon considéré.

3. Procédé selon la revendication 1, appliqué à une suite d'images, caractérisé en ce que, pour estimer un vecteur de mouvement local pour chaque échantillon caractéristique de l'image courante, il consiste en outre, pour la première itération, à initialiser cette estimation avec un vecteur de mouvement déduit de l'estimation de mouvement global, réalisée au cours de la dernière itération concernant l'image précédant l'image courante.

4. Procédé selon la revendication 1, caractérisé en ce que, pour détecter des échantillons caractéristiques, il consiste notamment à rechercher des échantillons par lesquels passent au moins un contour ; à découper chaque image en un nombre fixé de régions ayant des surfaces égales ; et à ne garder dans chaque région qu'un nombre fixé de points caractéristiques.

5. Procédé selon la revendication 1, caractérisé en ce que, pour estimer un vecteur de mouvement local pour chaque échantillon caractéristique de l'image courante, il consiste à :
   - définir un premier bloc ($B_r$) qui est un bloc d'échantillons de l'image de référence, centré sur l'échantillon caractéristique considéré (M) ;
   - définir une pluralité de seconds blocs ($B_c$) qui sont des blocs d'échantillons de l'image courante centrés respectivement sur des échantillons (Q) qui correspondent à l'échantillon caractéristique considéré (M), par une pluralité de vecteurs appelés déplacements à tester ($D_t$), chaque déplacement à tester étant constitué de la somme vectorielle d'un déplacement initial (Di) calculé pour l'échantillon caractéristique considéré (M), à partir de l'estimation globale de mouvement faite au cours de l'itération précédant l'itération en cours et à partir d'un déplacement supplémentaire (D) pris parmi une pluralité de déplacements supplémentaires prédéterminés ;
   - calculer pour chacun des seconds blocs ($B_r$) la valeur d'une fonction de test traduisant la coïncidence entre les valeurs représentatives des échantillons du premier bloc ($B_r$) et les valeurs représentatives des échantillons du second bloc ($B_c$) ;
   - déterminer quel déplacement supplémentaire ($D_m$) rend minimale la fonction de test, l'estimation du mouvement local étant constituée de la somme vectorielle du déplacement initial ($D_i$) et du déplacement supplémentaire ($D_m$) qui rend minimale la fonction de test.

6. Procédé selon la revendication 1, caractérisé en ce que la détection des échantillons caractéristiques consiste notamment à détecter : des échantillons où passe un contour anguleux ; des échantillons où passe un contour plat, parallèle à un premier axe de coordonnées (ox) ; et des échantillons où passe un contour plat parallèle à un second axe des coordonnées (oy) .

7. Procédé selon la revendication 1, caractérisé en ce qu'il consiste, en outre, à décomposer chaque image en un nombre fixé de sous-images, et à traiter chaque sous-image indépendamment des autres sous-images, notamment en déterminant une estimation de mouvement global pour chaque sous-image.

8. Dispositif d'estimation itérative de mouvement, pour la mise en oeuvre du procédé selon la revendication 1, caractérisé en ce qu'il comporte :
   - des moyens (8,9,10,12,10',12') pour échantillonner une image dite de référence et une image dite courante, avec un nombre fixé de niveaux de résolution ;
   - des moyens (11, 11') pour détecter des échantillons caractéristiques dans l'image courante, à chacun des niveaux de résolution ;
   - des moyens (14, 14') pour estimer un vecteur de mouvement local pour chaque échantillon caractéristique de l'image courante, à chacun des niveaux de résolution, en initialisant cette estimation avec un vecteur déplacement déduit d'une estimation de mouvement global, réalisée pour le niveau de résolution immédiatement inférieur ;

- des moyens (13, 13') pour estimer le mouvement global de l'image courante, en calculant les valeurs de paramètres d'un modèle, à partir des vecteurs de mouvement local estimés finalement pour le niveau de résolution maximale.

**Patentansprüche**

1. Iteratives Verfahren zur Abschätzung der Bewegung zwischen einem Bild, Bezugsbild genannt, und einem Bild, laufendes Bild genannt, dadurch gekennzeichnet, daß eine feste Anzahl von Iterationen durchgeführt werden, wobei jede Iteration darin besteht,
   - die beiden Bilder mit einer von Iteration zu Iteration steigenden Auflösung zu tasten, wobei jede Tastprobe eines Bildes von einem digitalen Wert gebildet wird,
   - charakteristische Tastproben im Bezugsbild zu erfassen,
   - einen örtlichen Bewegungsvektor für jede charakteristische Tastprobe des Bezugsbilds abzuschätzen, indem diese Abschätzung mit einem von einer globalen Bewegungsabschätzung während der der laufenden Iteration vorausgehenden Iteration stammenden Bewegungsvektor initialisiert wird,
   - eine Abschätzung der globalen Bewegung des laufenden Bilds durchzuführen, indem die Parameterwerte eines Modells ausgehend von den während der betrachteten Iteration geschätzten örtlichen Bewegungsvektoren berechnet werden.

2. Verfahren nach Anspruch 1, dadurch gekennzeichnet, daß zur Abschätzung der globalen Bewegung des laufenden Bilds das Verfahren darin besteht, die Werte von acht Parametern $a_1,\dots a_8$ zu berechnen, die ein Bewegungsmodell definieren, derart, daß eine Tastprobe mit den Koordinaten X, Y bezüglich zweier Koordinatenachsen auf die Koordinaten X', Y' überführt wird, derart, daß gilt:

$$X' = \frac{a_1\,X + a_2\,Y + a_3}{a_7\,X + a_8\,Y + 1} \quad (13)$$

$$Y' = \frac{a_4\,X + a_5\,Y + a_6}{a_7\,X + a_8\,Y = 1} \quad (14)$$

wobei die acht Parameterwerte $a_1,\dots a_8$ durch Auflösung eines Gleichungssystems mit acht Unbekannten bestehend aus den beiden oben erwähnten Beziehungen berechnet werden, die für die charakteristischen Tastproben geschrieben wurden, und wobei die Koordinaten X', Y' abhängig vom geschätzten örtlichen Bewegungsvektor für je eine dieser Tastproben und abhängig von den Koordinaten X, Y der betrachteten Tastprobe bestimmt werden.

3. Verfahren nach Anspruch 1 in Anwendung auf eine Bildfolge, dadurch gekennzeichnet, daß zur Abschätzung eines örtlichen Bewegungsvektors für jede charakteristische Tastprobe des laufenden Bilds das Verfahren weiter darin besteht, daß für die erste Iteration diese Abschätzung mit einem aus der Abschätzung der globalen Bewegung während der letzten Iteration betreffend das dem laufenden Bild vorausgegangene Bild initialisiert wird.

4. Verfahren nach Anspruch 1, dadurch gekennzeichnet, daß zur Erfassung der charakteristischen Tastproben das Verfahren insbesondere darin besteht, Tastproben zu suchen, durch die mindestens ein Umriß verläuft, jedes Bild in eine feste Anzahl von Zonen mit gleichen Oberflächen zu zerschneiden und in jeder Zone nur eine feste Anzahl von charakteristischen Punkten beizubehalten.

5. Verfahren nach Anspruch 1, dadurch gekennzeichnet, daß zur Abschätzung eines örtlichen Bewegungsvektors für jede charakteristische Tastprobe des laufenden Bilds das Verfahren darin besteht,
   - einen ersten Block ($B_r$) zu definieren, der ein Block von Tastproben des Bezugsbilds ist und auf die betroffene charakteristische Tastprobe (M) zentriert ist,
   - eine Mehrzahl von zweiten Blöcken ($B_c$) zu definieren, die Blöcke von Tastproben des laufenden Bilds sind und auf Tastproben (Q) zentriert sind, die der betrachteten charakteristischen Tastprobe (M) entsprechen, wobei die Definition durch eine Mehrzahl von Vektoren erfolgt, die Vektoren der zu testenden Verschiebungen ($D_t$) genannt werden, und wobei jede zu testende Verschiebung aus der Vektorsumme einer ursprünglichen Verschiebung (Di) gebildet wird, die für die betrachtete charakteristische Tastprobe (M) ausgehend von der globalen Bewegungsabschätzung während der der laufenden Iteration vorausgehenden Iteration und ausgehend von einer zusätzlichen Verschiebung (D) berechnet wird, die aus einer Mehrzahl von vorgegebenen zusätzlichen Verschiebungen entnommen wird,
   - für jeden der zweiten Blöcke ($B_c$) den Wert einer Testfunktion zu berechnen, die die Koinzidenz zwischen den für die Tastproben des ersten Blocks (B$_r$) repräsentativen Werte mit den für die Tastproben des zweiten Blocks (B$_c$) repräsentativen Werte wiedergibt,

- zu bestimmen, welche zusätzliche Verschiebung (D$_m$) der Testfunktion einen Mindestwert verleiht, wobei die Abschätzung der örtlichen Bewegung aus der Vektorsumme der ursprünglichen verschiebung (D$_l$) und der zusätzlichen Verschiebung (D$_m$) besteht, die dieser Testfunktion einen Mindestwert verleiht.

6. Verfahren nach Anspruch 1, dadurch gekennzeichnet, daß die Erfassung der charakteristischen Tastproben insbesondere in der Erfassung der Tastproben, durch die ein winkelförmiger Umriß verläuft, der Tastproben, durch die ein flacher und parallel zu einer ersten Koordinatenachsen (ox) verlaufender Umriß verläuft, und der Tastproben besteht, durch die ein flacher Umriß parallel zu einer zweiten Koordinatenachsen (oy) verläuft.

7. Verfahren nach Anspruch 1, dadurch gekennzeichnet, daß es weiter darin besteht, jedes Bild in eine feste Zahl von Unterbildern zu zerlegen und jedes Unterbild unabhängig von den anderen Unterbildern zu verarbeiten, insbesondere indem eine Schätzung der Globalbewegung für jedes Unterbild bestimmt wird.

8. Vorrichtung zur iterativen Abschätzung der Bewegung zur Durchführung des Verfahrens nach Anspruch 1, dadurch gekennzeichnet, daß sie enthält
   - Mittel (8, 9, 10, 12, 10', 12'), um ein Bezugsbild und ein laufendes Bild mit einer festen Anzahl von Auflösungsebenen zu tasten,
   - Mittel (11, 11'), um charakteristische Tastproben im laufenden Bild auf jeder der Auflösungsebenen zu erfassen,
   - Mittel (14, 14'), um einen örtlichen Bewegungsvektor für jede charakteristische Tastprobe des laufenden Bilds in jeder Auflösungsebene abzuschätzen, indem diese Abschätzung mit einem aus der Abschätzung der Globalbewegung initialisiert wird, die für die nächstniedere Auflösungsebene gebildet wurde,
   - Mittel (13, 13'), um die globale Bewegung des laufenden Bilds abzuschätzen, indem die Werte von Parametern eines Modells ausgehend von den schließlich für die höchste Auflösungsebene abgeschätzten Vektoren der lokalen Bewegung berechnet werden.

## Claims

1. Iterative method of estimating motion, between an image, referred to as reference image, and an image referred to as current, characterized in that it consists in carrying out a fixed number of iterations, each iteration consisting in:
   - sampling the two images, with a resolution increasing at each iteration, and each image sample being represented by a numerical value;
   - detecting characteristic samples in the reference image;
   - estimating a vector of local motion for each characteristic sample of the reference image, by initializing this estimate with a vector of motion deduced from an estimate of global motion, carried out in the course of the iteration preceding the iteration in progress;
   - making an estimate of the global motion reference image, by calculating the parameter values of a model, from the vectors of local motion which are estimated in the course of the iteration under consideration.

2. Method according to Claim 1, characterized in that in order to make the estimate of the global motion of the current image, it consists in calculating the values of eight parameters a1,.., a8 defining a model of motion such that a sample having coordinates X, Y with respect to a first and a second coordinate axis respectively, is displaced to coordinates X', Y' such that:

$$X' = \frac{a_1 X + a_2 Y + a_3}{a_7 X + a_8 Y + 1} \quad (13)$$

$$Y' = \frac{a_4 X + a_5 Y + a_6}{a_7 X + a_8 Y + 1} \quad (14)$$

the eight parameter values a1,.., a8 being calculated by solving a system of equations with eight unknowns which is constituted by the two relationships above, written for characteristic samples, the coordinates X', Y' being determined as a function of the estimated local motion vector for each of these samples respectively, and as a function of the coordinates X, Y of the sample under consideration.

3. Method according to Claim 1, applied to an image sequence, characterized in that, in order to estimate a vector of local motion for each characteristic sample of the current image, it furthermore consists, for the first iteration, in initializing this estimate with a vector of motion deduced from the estimate of global motion, carried out in the course of the last iteration relating to the image preceding the current image.

4. Method according to Claim 1, characterized in that, in order to detect characteristic samples, it consists in particular in seeking samples through which passes at least one contour; in partitioning each image into a fixed number of regions having equal areas; and in keeping, in each region, only a fixed number of characteristic points.

5. Method according to Claim 1, characterized in that, in order to estimate a vector of local motion for each characteristic sample of the current image, it consists in:
   - defining a first block ($B_r$) which is a block of samples of the reference image, and is centred on the characteristic sample under consideration (M);
   - defining a plurality of second blocks ($B_c$) which are blocks of samples of the current image which are centred on samples (Q) respectively which correspond to the characteristic sample under consideration (M), by a plurality of vectors called displacements to be tested ($D_t$), each displacement to be tested being constituted by the vector sum of an initial displacement (Di) calculated for the characteristic sample under consideration (M), from the global estimate of motion made in the course of the iteration preceding the iteration in progress; and from an additional displacement (D) taken from a plurality of predetermined additional displacements;
   - calculating for each of the second blocks ($B_r$) the value of a test function reflecting the coincidence between the values representative of the samples of the first block ($B_r$) and the values representative of the samples of the second block ($B_c$);
   - determining which additional displacement ($B_m$) renders the test function minimal, the estimate of the local motion being constituted from the vector sum of the initial displacement ($D_i$) and of the additional displacement ($D_m$) which renders the test function minimal.

6. Method according to Claim 1, characterized in that the detection of the characteristic samples consists in particular in detecting: samples wherein passes an angular contour; samples wherein passes a flat contour, parallel to a first coordinate axis (ox); and samples wherein passes a flat contour parallel to a second coordinate axis (oy).

7. Method according to Claim 1, characterized in that it furthermore consists in decomposing each image into a fixed number of sub-images, and in processing each sub-image independently of the other sub-images, in particular by determining an estimate of global motion for each sub-image,

8. Device for iterative estimation of motion, for implementing the method according to Claim 1, characterized in that it comprises:
   - means (8, 9, 10, 12, 10', 12') for sampling an image referred to as reference and an image referred to as current, with a fixed number of levels of resolution;
   - means (11, 11') for detecting characteristic samples in the current image, at each of the levels of resolution;
   - means (14, 14') for estimating a vector of local motion for each characteristic sample of the current image, at each of the levels of resolution, by initializing this estimate with a displacement vector deduced from an estimate of global motion, carried out for the immediately inferior level of resolution;
   - means (13, 13') for estimating the global motion of the current image, by calculating the parameter values of a model, from vectors of local motion which are estimated finally for the maximal level of resolution.

| Numéro d'itération et de résolution | Nombre d'échantillons |
|:---:|:---:|
| 1 | $\dfrac{K}{2^2} \times \dfrac{L}{2^2}$ |
| 2 | $\dfrac{K}{2} \times \dfrac{L}{2}$ |
| 3 | $K \times L$ |

# FIG.1

ECHANTILLONNAGE DE L'IMAGE COURANTE ET DE L'IMAGE
DE RÉFÉRENCE

| RÉSOLUTION N° 1 | RÉSOLUTION N° 2 | . . . . . . | RÉSOLUTION N° NI |

| DÉTECTION DES ÉCHANTILLONS CARACTÉRISTIQUES | DÉTECTION DES ÉCHANTILLONS CARACTÉRISTIQUES | | DÉTECTION DES ÉCHANTILLONS CARACTÉRISTIQUES |

1ère ITÉRATION DE L'ESTIMATION
GLOBALE DU MOUVEMENT,
AVEC INITIALISATION PAR
UN MOUVEMENT NUL.

2ème ITÉRATION DE L'ESTIMATION
GLOBALE DU MOUVEMENT,
AVEC INITIALISATION PAR
LA 1ère ESTIMATION GLOBALE

NI.ième ITÉRATION DE L'ESTIMATION
GLOBALE DU MOUVEMENT AVEC
INITIALISATION PAR LA
(NI.1)ième ESTIMATION GLOBALE

FIG.2

15

# FIG.3

(n-1)iéme ITÉRATION

n ième ITÉRATION DE L'ESTIMATION DE MOUVEMENT GLOBAL

CALCUL D'UN VECTEUR INITIALISATION $\overline{Di}$ POUR CHAQUE ÉCHANTILLON CARACTÉRISTIQUE DE L'IMAGE COURANTE, A PARTIR DE LA (n-1)ième ESTIMATION DE MOUVEMENT GLOBAL

ESTIMATION D'UN VECTEUR DÉPLACEMENT LOCAL POUR CHAQUE ÉCHANTILLON CARACTÉRISTIQUE DE L'IMAGE COURANTE, PAR MISE EN CORRESPONDANCE AVEC DES ÉCHANTILLONS CARACTÉRISTIQUES DE L'IMAGE DE RÉFÉRENCE

RÉSOLUTION D'UN SYSTÈME D'ÉQUATIONS FOURNISSANT UNE ESTIMATION GLOBALE DU MOUVEMENT DANS L'IMAGE COURANTE

(n+1) iéme ITÉRATION

| N°12 | N°13 | N°14 | N°15 | N° 0 |
|------|------|------|------|------|
| N°11 | | | | N° 1 |
| N°10 | | | | N°2 |
| N°9 | | | | N°3 |
| N°8 | N°7 | N°6 | N°5 | N°4 |

# FIG.4

# FIG.5

FIG.6

FIG.7

EP 0 410 826 B1